# FASCICULE DE BREVET EUROPEEN

(11) **EP 0 431 138 B1**
(45) Date de publication et mention de la délivrance du brevet: **19.10.1994**
(21) Numéro de dépôt: 90910144.6
(22) Date de dépôt: 22.06.1990
(51) Int. Cl.: G06F 15/02

(54) **SYSTEME DE SAISIE, DE TRAITEMENT ET DE TRANSMISSION D'INFORMATIONS ET DE DONNEES**
ERFASSUNGS-, VERARBEITUNGS- UND ÜBERTRAGUNGSSYSTEM FÜR INFORMATION UND DATEN
SYSTEM FOR INPUTTING, PROCESSING AND TRANSMITTING INFORMATION AND DATA

(30) Priorité: 23.06.1989 FR 8908653
(43) Date de publication de la demande: 12.06.1991
(73) Titulaire: Parienti, Raoul, 06000 Nice (FR)
(72) Inventeur: Parienti, Raoul, 06000 Nice (FR)
(74) Mandataire: Faber, Jean-Paul
(86) Numéro de dépôt international: FR9000460
(87) Numéro de publication internationale: WO9100574

(56) Documents cités:
- WO-A-87/07106
- FR-A- 2 514 537
- US-A- 4 449 186
- US-A- 4 503 288

## Description

L' évolution de notre société conduit à multiplier les opérations de saisie et de transmission de données via tout type de liaison.

Malgré l'avance remarquable des techniques, nous assistons encore à une trop importante manipulation de papier, tant pour la saisie que pour l'exploitation des données. L'évolution de l'informatique n'a pas encore détroné le bon de commande, le billet d'avion, le récépicé etc...

L'invention telle que définie dans la revendication 1 vise à supprimer les inconvénients décrits plus haut. Le système présenté dans le présent brevet est plus particulièrement destiné à une population captive, de type abonnés par exemple, amenée à avoir des échanges réguliers avec une structure centrale. Le système présenté dans le présent brevet, peut être utilisé pour de très nombreuses applications, telle que réservation d'hotel, d'avion, ou de toute nature, commande pour vente par correspondance, diagnostic technique ou médical, accès à des services conviviaux, à des messageries, etc... Pour la compréhension, nous allons décrire à titre d'exemple non limitatif, un mode de réalisation de l'invention, plus particulièrement adapté aux abonnés d'une compagnie aérienne. Le document ci-dessous expose dans un premier temps une application spécifique de l'invention permettant, à distance, et automatiquement, via une ligne téléphonique, et/ou un ensemble de bornes, la réservation et le paiement d'un vol, ainsi que l'accès à bord.

Le dispositif se compose d'un boitier pouvant recevoir une carte à mémoire.

Le dit boitier est muni d'un clavier, d'un écran, d'un bloc infra-rouge intégrant des composants réceptifs et émissifs, et d'un ensemble acoustique composé d'un haut-parleur, et d'un microphone. Le boitier est également pourvu d'un dispositif capable de lire des signes optiques (code à barres, etc...). Le microphone et le haut-parleur peuvent, soit être groupés, soit être séparés, par exemple par une articulation de sorte que le couple haut-parleur - microphone se positionne convenablement, respectivement sur le microphone, et sur le haut-parleur d'un combiné téléphonique. La carte mémoire peut être de type bi-puces, voire multipuces. Pour une meilleur compréhension nous adopterons dans la suite de l'exposé le concept bi-puces.

Une des puces sera destinée à rester à demeure sur la dite carte, elle pourra conserver des données permanentes, telles que les coordonnées de l'utilisateur, son type d'abonnement, son adresse, et/ou l'ensemble des données susceptibles de ne pas évoluer rapidement dans le temps. La deuxième puce, elle par contre sera de type amovible, et périodique, et donc sera remplacée régulièrement, pour suivre l'évolution et la modification des paramètres variables tels que les horaires, les tarifs et toutes variations périodiques.

L'abonné recevra par exemple, une nouvelle puce tous les six mois, en même temps que les autres documents "papiers" que reçoit régulièrement chaque abonné. Une fois la puce amovible encliquetée, l'appareil pourra communiquer à la demande de l'utilisateur, toutes les données relatives par exemple aux vols d'une compagnie aérienne suceptible de l'interesser.

Le dialogue homme-boîtier se fera grace au clavier alphanumérique, et un écran qui permettront une communication conviviale. Le dialogue boîtier-ordinateur central se fera grace à un simple téléphone selon les modalités suivantes :

Pour effectuer les reservations d'un vol, l'utilisateur va taper sur le clavier la destination en abrègé (trois lettres par exemple), puis l'horaire souhaité. Les éléments mémorisés sur la puce amovible et rapportés au choix effectué seront consultés et via l'écran l'utilisateur obtiendra tous les détails de son vol : numéro, horaire, prix...

Le choix du vol peut se faire également par le dispositif lecteur de codes à barres sur tout document ad hoc. L'utilisateur devra décrocher un téléphone et presser une touche du clavier, l'appareil enverra les DTMF pour effectuer la numérotation et ensuite l'ensemble des données seront envoyées par le haut-parleur appliqué contre le microphone du combiné. La numérotation initiale se fera manuellement dans le cas où la ligne n'est pas connectée à un central electronique. Une fois les données transmises, l'ordinateur traite ces données et envoie la confirmation ou propose un autre vol si le départ souhaité est complet. Pour recevoir les informations le microphone devra être plaqué sur le haut-parleur du combiné, cette procédure pourra se faire selon deux modalités:

Soit l'appareil est plaqué sur le microphone du combiné pour l'émission des données et ensuite replaqué sur le haut-parleur, après que l'utilisateur ai reçu un signal de fin de transaction par le haut-parleur du combiné, et/ou par un message sur l'écran ou encore grace à un signal acoustique et/ou lumineux de l'appareil, soit encore la transmission des données se fera non pas en deux phases successives, mais en une seule phase; pour ce faire il sera nécéssaire que dans le même temps les données soient émisent du boitier vers l'ordinateur et de l'ordinateur vers le boitier, en plaçant le couple microphone/haut-parleur du boitier convenablement sur celui du combiné; il sera alors utile de faire varier la distance et l'inclinaison du couple microphone/haut-parleur. Ce réglage pourra se faire grace à une articulation ou par tout autre système de type téléscopique bien connu.

Après que l'utilisateur se voit confirmer son vol par l'ordinateur, les paramètres relatifs à ce vol seront mémorisés dans la puce permanente de la carte. En fait pour toutes les procédure qui suivront, le boitier se substituera au traditionnel billet, les éléments du voyage peuvent être consultés à tout moment tant par le voyageur que par toute autre personne ou organisme autorisé. Dès lors le boitier va permettre l'accès à bord grace à l'interface infra-rouge, en effet lorsque l'utilisateur aura à franchir les différents portillons pour embarquer dans l'avion, une borne à demeure ) va émettre un signal infrarouge reconnu par le boitier portatif comme une invitation à émettre les éléments relatifs au vol choisis par l'utilisateur et confirmés par l'utilisateur lors de la transmission acoustique précédement décrite.

Le boitier portatif va effectivement dialoguer avec la borne afin de vérifier et de valider le passage, si tout est reconnu comme normal, après transfert des données avec l'ordinateur central, la borne va permettre le passage selon toute procédure adoptée par la compagnie: libération d'un tripode, émission d'un signal d'acquiescement quelconque, etc... Dans le cas contraire, le système va faire connaître son désaccord et ne permettra pas le passage. A tout moment le boitier fera office de billet en affichant en tant que de besoin les éléments du vol. Par ailleurs la puce permanente va mémoriser les vols de chaque utilisateur afin d'appliquer les différents avantages consentis par la compagnie: un billet gratuit tous les x vols répondant à tel ou tel critère, historique des voyages, etc...

Bien entendu, ces différents éléments doivent respecter les lois attachées à la notion de confidentialité, il sera possible à cet effet de n'avoir accès à ces données que grace à un code secret personnel.

Selon une autre version, l'appareil peut également servir de moyen de paiement, pour ce faire il sera nécéssaire de remplacer la carte à puce par une carte bancaire à puce ou toute autre carte de paiement, en fait la carte bancaire pourra avoir un évidement afin de pouvoir recevoir une puce amovible. Le paiement à distance se fera grace à l'interface acoustique, tout comme le transfert des données, lors de la réservation précédement décrite, via une ligne téléphonique. La même ligne téléphonique permettra également de réactualiser les données mémorisées dans la puce amovible. Une autre application du système décrit dans le présent brevet est la communication conviviale entre les systèmes portatifs précédement décrits, et tout autre dispositif capable de dialoguer avec les dits portatifs.

On décrira à titre d'exemple non limitatif trois types d'utilisations:
1) PORTATIF/SYSTEME
2) PORTATIF/PORTATIF
3) PORTATIF/SYSTEME/PORTATIF OU INDIVIDU

Le premier cas d'utilisation énoncé est précisément le cas de figure de la réservation du billet d'avion vu plus haut, mais l'application PORTATIF/SYSTEME la plus générale, sera entre autre la vente par correspondance. La clientèle n'aura plus qu'à glisser le lecteur optique sur la (ou les) références choisie(s), de décrocher son combiné téléphonique, et la transmission des données se fera automatiquement vers le système informatique, qui recevant ces données va les interpréter, et renvoyer à la clientèle un accusé de reception, une suggestion, etc... Bien entendu lors de la transmission des données le boitier à pris en compte les paramètres propres à chaque client, mémorisés dans la carte à puce.

Dans le deuxième type d'exemple d'utilisation, PORTABLE/PORTABLE les données d'un portatif sont directement transmises vers un autre portatif via une ligne téléphonique, dans ce cas de figure, l'utilisateur aura à taper un texte ou différentes données, par le clavier, ou par tout autre moyen disponible sur le portatif, puis les données seront reçues par un autre portatif en attente, à l'autre bout de la ligne téléphonique. Dans ce cas, le système présente l'avantage de transmettre des données de façon rapide et économique, notament, quand les boitiers émetteur et récepteur, sont éloignés géographiquement.

Enfin, dans le troisième cas d'utilisation du système présenté dans le présent brevet, à savoir PORTATIF/SYSTEME/PORTATIF ou possesseur du portatif. Il s'agit de l'application messagerie plus particulièrement inter-abonnés via un centre serveur adapté. L'abonné, qualifié grace aux données mémorisées dans la carte à puce, installées dans son boitier portatif, pourra, via le système centre-serveur contacter un autre interlocuteur dont le profil correspond à une attente déterminée. Exemple: Un utilisateur abonné au service "cinéphile" arrivant dans une ville inconnue, souhaite voir le dernier film de tel metteur en scène, en compagnie d'un universitaire amateur du même metteur en scène, souhaitant voir le même film.

L'utilisateur va programer les éléments de ses souhaits, par le clavier et grace à l'échange convivial autorisé par la puce dédiée à une application spécifique.

Une fois programées les données sont acheminées vers le centre serveur qui va analyser la demande et va l'orienter vers une autre personne ayant formulé une proposition correspondante. La mise en contact des différents interlocuteurs peut se faire directement de telle sorte que l'appelant transmettant une proposition définie, rentre directement en contact avec le correspondant, ayant lui-même auparavant effectué une proposition adéquate. Le centre serveur effectue l'acheminement convenable, après analyse des comptabilités des différents paramètres de la proposition (dans notre exemple): choix du film, de l'horaire, de la zone géographique, du moyen de locomotion, etc... La mise en contact téléphonique direct respecte fondamentalement la confidentialité des intervenants, car en aucune façon, l'un des correspondant ne pourra connaitre les coordonnées de l'autre, la mise en contact se faisant de manière totalement anonyme. Le centre serveur agit comme détourneur d'appel séléctif et intelligent. Le premier appeilant le centre serveur laisse les paramètres d'une proposition déterminée ainsi que ses coordonnées téléphoniques. L'appellant suivant, effectuant une proposition compatible avec la première, voit son appel directement orienté vers le premier à avoir effectué une demande compatible. Bien entendu la messagerie peut avoir une forme simplifiée, tel que consultation de base de données: la bourse, résultats sportifs, météo, etc... La messagerie peut s'adresser soit à une population captive, disposant d'une carte à puce, ou d'une puce interchangeable, dédiée à un usage précis, après en avoir acquitté des droits; soit à une population non captive et plus ouverte, à l'instar des messageries du type "MINITEL".

On décrira maintenant à titre d'exemple non limitatif un mode de réalisation particulier de l'invention en référence aux dessins annexés dans lesquels :
- la figure 1 représente le boîtier portatif selon l'invention ;
- la figure 2 représente le boîtier portatif en situation de transmission.

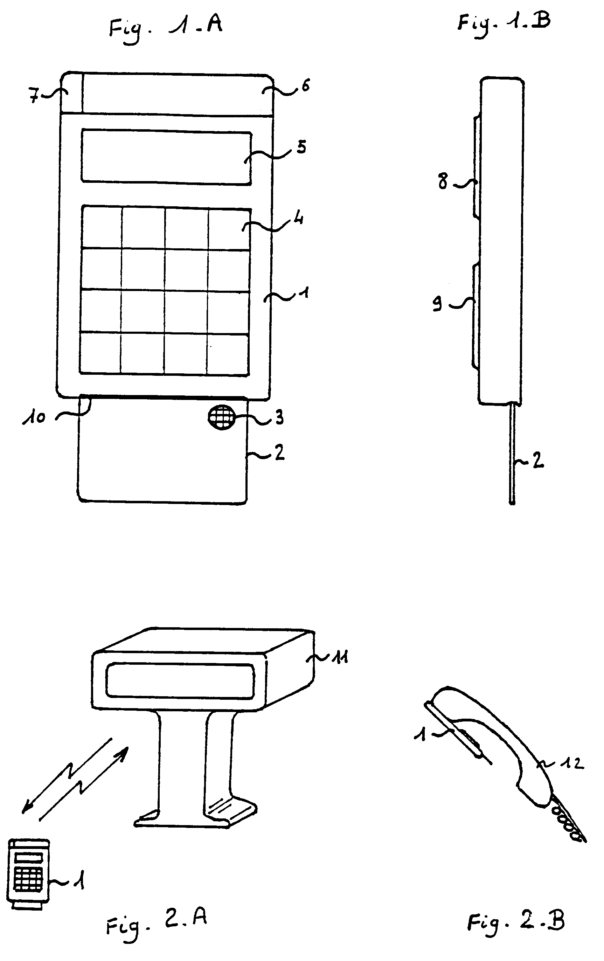

On voit sur la figure 1 le boîtier (1) qui comporte les moyens de traitement intégrés gérés par exemple par un microprocesseur et les moyens de communication. Un clavier (4) permet à l'utilisateur d'entrer des données manuellement, un émetteur/récepteur infra-rouge (6) pour dialoguer avec une borne (11), un émetteur (8) récepteur (9) acoustiques pour dialoguer via le réseau téléphonique avec tout système prévu à cet effet (serveur, banque de données, centre informatique, etc...) .

Un lecteur optique (7) capable de lire des codes spécifiques du type code barres ou autre. Toute donnée saisie par les moyens ci-desssus énoncés sont affichables sur un écran (5).

Le boîtier portatif inclue un lecteur (10) qui reçoit une carte (2) contenant un ou plusieurs microcircuits (3) et/ou un ou plusieurs supports mémoire (3). La configuration la plus typique étant la suivante :
- un microcircuit permanent contenant les éléments identifiant l'utilisateur,
- un microcircuit interchangeable contenant une mémoire et permettant à l'utilisateur une utilisation spécifique, exemple microcircuit intégrant les horaires d'avion, les différents spectacles dans une ville, etc... ou plus largement un microcircuit vous autorisant un accès d'un centre serveur défini.

On peut voir sur la figure 2 un boîtier portatif (1) communicant avec une borne spécialisée (11) grâce à leurs interfaces optiques respectives et un boîtier portatif (1) communiquant via un combiné téléphonique (12).

## Revendications

1. Système de saisie, de traitement et de transmission d'informations constitué d'une pluralité de boîtiers portatifs (1) intégrant chacun un lecteur (10) susceptible de recevoir une carte (2), caractérisé par le fait que chaque boîtier portatif comprend en combinaison des moyens de saisie d'informations optiques (7), acoustiques (8) et manuel (4), des moyens de traitement et des moyens de transmission (8 et 9) desdites informations acoustiques via le réseau téléphonique et optiques (6) via des bornes spécialisées (11) et que chacun de ces moyens est paramétré par des données contenues dans des modules mémoires interchangeables (3) se solidarisant dans des cartes à mémoire (2) introduites dans les lecteurs (10) desdits boîtiers.

2. Système de saisie, de traitement et de transmission selon la revendication n°1, caractérisé par le fait que la saisie des informations est réalisée indifféremment par les moyens de saisie optiques (7), par le clavier (4) intégré au boîtier (1), par les moyens de réception de l'interface acoustique (8) via le réseau téléphonique et par les moyens de réception (6) de l'interface optique via une borne spécialisée (11) ou un autre boîtier portatif.

3. Système de saisie, de traitement et de transmission selon les revendications n°1 et 2, caractérisé par le fait que l'envoi des informations est réalisé indifféremment par les moyens d'émission (9) de l'interface acoustique via le réseau téléphonique et par les moyens d'émission (6) de l'interface optique via une borne spécialisée (10) ou un autre boîtier portatif.

4. Système de saisie, de traitement et de transmission selon les revendications n°1, 2 et 3, caractérisé par le fait que deux boîtiers portatifs peuvent dialoguer entre eux grâce à leurs interfaces optiques respectives s'ils sont à proximité l'un de l'autre et grâce à leurs interfaces acoustiques respectives, via le réseau téléphonique s'ils sont éloignés.

5. Système de saisie, de traitement et de transmisson selon les revendications n°1, 2 et 3, caractérisé par le fait que chaque boîtier portatif peut dialoguer avec un serveur spécialisé grâce à son interface optique, via une borne et grâce à son interface acoustique, via le réseau téléphonique.

6. Système de saisie, de traitement et de transmission selon les revendications n°1, 2 et 3, caractérisé par le fait que des cartes bancaires, ou tout autre carte de paiement, peuvent être introduites dans le lecteur d'un boîtier portatif pour effectuer des paiements grâce à l'interface acoustique via le réseau téléphonique.

7. Système de saisie, de traitement et de transmission selon les revendications n°1, 3, 5 et 6, caractérisé par le fait que chaque envoi d'informations est accompagné d'un code identifiant pour permettre un contrôle à postériori.

8. Système de saisie, de traitement et de transmission selon les revendications n°1, 2 et 3, caractérisé en ce que le boîtier portatif, après avoir envoyé et reçu les informations convenables, peut se substituer à un document écrit tel que bon de commande, billet d'entrée, carte d'embarquement et tout document justifiant une transaction ou autorisant un accès, en affichant, en tant que de besoin, les paramètres prouvant la transaction ou justifiant l'accès.

9. Système de saisie, de traitement et de transmission selon les revendications n°1, 2 et 8, caractérisé en ce que le boîtier portatif émet à proximité d'une borne un ensemble de données permettant le déblocage de moyens mécaniques susceptibles d'autoriser un accès.

10. Système de saisie, de traitement et de transmission selon les revendications 1, 2 et 3, caractérisé en ce que le portatif appelle un centre serveur capable d'analyser des choix émis par ledit portatif et programmés par l'utilisateur, après quoi le centre serveur réoriente l'appel convenablement vers une autre personne physique ou morale qui a exprimé, dans un premier temps, des voeux correspondants.

## Patentansprüche

1. System zur Erfassung, Verarbeitung und Übertragung von Informationen, das aus einer Mehrzahl von Handgeräten (1) gebildet ist, in deren jedes ein Lesegerät (10) integriert ist, das eine Karte (2) aufnehmen kann, dadurch gekennzeichnet, daß jedes Handgerät in Kombination Mittel zum Erfassen optischer (7), akustischer (8) und manueller (4) Informationen, Mittel zum Verarbeiten und Mittel (8 und 9) aufweist, um die genannten akustischen Informationen über das Telefonnetz und die optischen (6) über spezielle Stationen (11) zu übertragen, und daß jedes dieser Mittel durch Daten beeinflußt ist, die in auswechselbaren Speichermodulen (3) enthalten sind, die an den Speicherkarten (2) befestigt sind, die in die Lesegeräte (10) der genannten Handgeräte eingeführt sind.

2. System zur Erfassung, Verarbeitung und Übertragung nach Anspruch 1, dadurch gekennzeichnet, daß die Erfassung der Informationen unterschiedslos durch die optischen Erfassungsmittel (7), durch die in das Handgerät (1) eingebaute Tastatur (4), durch die Empfangsmittel der akustischen Schnittstelle (8) über das Telefonnetz, durch die Empfangsmittel (6) der optischen Schnittstelle über eine spezielle Station (11) oder durch ein weiteres Handgerät bewirkt wird.

3. System zur Erfassung, Verarbeitung und Übertragung nach den Ansprüchen 1 und 2, dadurch gekennzeichnet, daß das Aussenden der Informationen unterschiedslos durch die Sendemittel (9) der akustischen Schnittstelle über das Telefonnetz, durch die Sendemittel (6) der optischen Schnittstelle über eine spezielle Station (11) oder durch ein weiteres Handgerät bewirkt wird.

4. System zur Erfassung, Verarbeitung und Übertragung nach den Ansprüchen 1, 2 und 3, dadurch gekennzeichnet, daß zwei Handgeräte miteinander dank ihrer optischen Schnittstellen in Dialog treten können, wenn sie einander angenähert sind, und dank ihrer akustischen Schnittstellen über das Telefonnetz, wenn sie voneinander entfernt sind.

5. System zur Erfassung, Verarbeitung und Übertragung nach den Ansprüchen 1, 2 und 3, dadurch gekennzeichnet, daß jedes Handgerät mit einem speziellen Bediener dank seiner optischen Schnittstelle über eine Station und dank seiner akustischen Schnittstelle über das Telefonnetz in Dialog treten kann.

6. System zur Erfassung, Verarbeitung und Übertragung nach den Ansprüchen 1, 2 und 3, dadurch gekennzeichnet, daß Scheckkarten oder jede andere Zahlmittelkarte in das Lesegerät eines Handgerätes eingeführt werden können, um Zahlungen vermittels der akustischen Schnittstelle über das Telefonnetz zu bewirken.

7. System zur Erfassung, Verarbeitung und Übertragung nach den Ansprüchen 1, 3, 5 und 6, dadurch gekennzeichnet, daß jede Aussendung von Informationen von einem Identifizier-Kode begleitet ist, um eine nachträgliche Kontrolle zu ermöglichen.

8. System zur Erfassung, Verarbeitung und Übertragung nach den Ansprüchen 1, 2 und 3, dadurch gekennzeichnet, daß das Handgerät, nach Aussenden und Empfangen geeigneter Informationen, ein schriftliches Dokument ersetzen kann, beispielsweise einen Bestellschein, eine Eintrittskarte, Bordkarte oder jedwedes Dokument, das zu einer Transaktion berechtigt oder einen Zugang gestattet, indem es, je nach Bedarf, die Parameter anzeigt, die die Transaktion nachweisen oder zum Zugang berechtigen.

9. System zur Erfassung, Verarbeitung und Übertragung nach den Ansprüchen 1, 2 und 8, dadurch gekennzeichnet, daß das Handgerät in der Nähe einer Station einen Datensatz aussendet, der die Entriegelung mechanischer Mittel ermöglicht, die einen Zugang freigeben können.

10. System zur Erfassung, Verarbeitung und Übertragung nach den Ansprüchen 1, 2 und 3, dadurch gekennzeichnet, daß das Handgerät einen zentralen Bediener anruft, der in der Lage ist, die durch das genannte Handgerät ausgesandten und durch den Benutzer programmierten Wünsche zu analysieren, wonach der zentrale Bediener den Anruf in geeigneter Weise zu einer anderen natürlichen oder juristischen Person umleitet, die zuvor entsprechende Wünsche geäußert hat.

## Claims

1. A system of picking-up, processing and transmitting information, composed of a plurality of portable case (1), each integrating a reader (10) capable of receiving a card (2), and characterized by the fact that each portable case comprises in combination optical (7), acoustic (8) and manual (4) means of picking up information, means of processing and means of transmitting the said information - acoustic means (8 and 9) via the telephone network and optical means (6) via specialized terminals (11) - and that each of these means is parametered by data contained in interchangeable memory modules (3) which become integrated into memory cards (2) introduced into the readers (10) in the said cases.

2. A system as in Claims 1, of picking up, processing and transmitting, characterized by the fact that picking up the information is realized equally well by the optical pick-up means (7), by the key (4) integrated into the case (1), by the reception means of the acoustic interface (8) via the telephone network and by the reception means (6) of the optical interface via a specialized terminal (11) or another portable case.

3. A system as in Claims 1 and 2, of picking up, processing and transmitting, characterized by the fact that sending the information is realized equally well by the emission means (9) of the acoustic interface via the telephone network and by the emission means (6) of the optical interface via a specialized terminal (10) or another portable case.

4. A system as in Claims 1, 2 and 3, of picking up, processing and transmitting, characterized by the fact that two portable cases may hold a dialogue with one another thanks to their respective optical interfaces if they are close together and thanks to their respective acoustic interfaces via the telephone network if they are far apart.

5. A system as in Claims 1, 2 and 3, of picking up, processing and transmitting, characterized by the fact that each portable case may hold a dialogue with a specialized helper via a terminal, thanks to its optical interface, and via the telephone network, thanks to its acoustic interface.

6. A system as in Claims 1, 2 and 3, of picking up, processing and transmitting, characterized by the fact that bank cards or any other payment card may be introduced into the reader of a portable case for effecting payments via the telephone network, thanks to the acoustic interface.

7. A system as in Claims 1, 3, 5 and 6, of picking up, processing and transmitting, characterized by the fact that each sending of information is accompanied by an identifying code in order a posteriori to enable a check.

8. A system as in Claims 1, 2 and 3, of picking up, processing and transmitting, characterized in that after having sent and received suitable information the portable case may be substituted for a written document such as an order paper, ticket of admission, boarding card and any document justifying a transaction or authorizing an access, whilst displaying as needed the parameters proving the transaction or justifying the access.

9. A system as in Claims 1, 2 and 8, of picking up, processing and transmitting, characterized in that the portable case emits close to a terminal a set of data enabling unblocking of mechanical means capable of authorizing an access.

10. A system as in Claims 1, 2 and 3, of picking up, processing and transmitting, characterized in that the portable case calls a helper centre capable of analysing choices emitted by the said portable case and programmed by the user, after which the helper centre suitably redirects the call towards another physical or moral person who has previously expressed corresponding wishes.
